# EUROPÄISCHE PATENTANMELDUNG

(11) **EP 0 553 656 A1**
(43) Veröffentlichungstag der Anmeldung: **04.08.1993**
(21) Anmeldenummer: 93100507.8
(22) Anmeldetag: 15.01.1993
(51) Int. Cl.: B26D 7/26

(54) **Schneidapparat**

(30) Priorität: 28.01.1992 DE 4202186
(71) Anmelder: E.C.H. Will GmbH (HRB 51 057), D-22529 Hamburg (DE)
(72) Erfinder: Hüser, Peter, Dipl.-Ing., W-2086 Ellerau (DE); Peter, Jürgen, W-2000 Hamburg 61 (DE); Schlottke, Karl-Heinz, W-2081 Tangstedt (DE)

(57) **Zusammenfassung**

Es ist ein Schneidapparat zum Quertrennen einer laufenden Materialbahn mit einem um eine quer zur Materialbahn (1) und ihrer Förderrichtung (2) verlaufende Drehachse (7) rotierenden Messerträger (9) mit wenigstens einem sich in Achsrichtung erstreckenden umlaufenden Messer (11) und einem stationären Messerträger (14) mit einem im wesentlichen in Richtung des umlaufenden Messers quer zur Bahn verlaufenden und in der Trennzone (3) zum Schnitt mit dem rotierenden Messer zusammenwirkenden stationären Messer (22) beschrieben. Wenigstens eines der Messer (22) ist an einem Messerhalter (18) angebracht, der auswechselbar in einem der Messerträger (14) eingesetzt ist.

Diese Ausbildung des Schneidapparats hat den Vorteil, daß ein abgenutztes Messer (22) auf einfache Weise gegen ein neues ausgetauscht werden kann. Dazu wird der Messerhalter (18) mit dem abgenutzten Messer aus der Vorrichtung herausgezogen und durch einen anderen, außerhalb der Maschine mit einem frischen Messer bestückten Messerhalter ersetzt.

## Beschreibung

Die Erfindung betrifft einen Schneidapparat zum Quertrennen einer laufenden Materialbahn mit die Bahn durch eine Trennzone bewegenden Bahnführungsmitteln, einem um eine quer zur Materialbahn und ihrer Förderrichtung verlaufende Drehachse rotierenden Messerträger mit wenigstens einem sich in Achsrichtung erstreckenden umlaufenden Messer und einem stationären Messerträger mit einem im wesentlichen in Richtung des umlaufenden Messers quer zur Bahn verlaufenden und in der Trennzone zum Schnitt mit dem rotierenden Messer zusammenwirkenden stationären Messer.

Derartige Schneidapparate dienen zum Einbringen von Einschnitten in laufende Materialbahnen quer zu deren Förderrichtung. So können ein oder mehrere Schnitte in der Bahn erzeugt werden oder die Bahn kann mit einer querverlaufenden Perforation versehen werden. Die Materialbahn kann mit einer solchen Vorrichtung auch in aufeinanderfolgende Bahnabschnitte zerschnitten werden. Dabei kann es sich um Bahnen aus Papier, Kunststoff- oder Metallfolie, Gewebe oder dergleichen Material handeln.

Wegen ihrer starken Beanspruchung beim Schnitt sind die Messer einem hohen Verschleiß unterworfen. Das gilt besonders für ein stationäres Messer, das bei jedem Schnitt auf eines von mehreren rotierenden Messern trifft. Um eine bestimmte Schnittqualität zu gewährleisten, ist es daher erforderlich, die verschlissenen Messer gegen neue auszutauschen.

Um den Austausch der Messer einer drehbaren Messertrommel zu erleichtern, ist es bekannt, alle Messer mit einer zentral zu betätigenden Spanneinrichtung auf der Trommel zu fixieren. Durch Lösen der Spanneinrichtung werden alle Messer der Messertrommel gleichzeitig freigegeben und können nun ausgewechselt werden (DE 33 03 628 C2). Ähnlich wird zum Messerwechsel beim stationären Messer verfahren. Dabei müssen die zum Messerwechsel erforderlichen Montagearbeiten in der Maschine vorgenommen werden, deren Produktion in dieser Zeit unterbrochen ist. Auf Grund der notwendigen Messerwechsel ergeben sich also längere Stillstandszeiten der Maschine, was deren Verfügbarkeit und Produktivität einschränkt. Besonders stark fällt der Wechsel des stationären Messers ins Gewicht. Weil dessen Verschleiß besonders hoch ist, muß es öfter als die rotierenden Messer ausgewechselt werden. Es ist das Ziel der Erfindung, die damit verbundenen Nachteile zu reduzieren.

Der Erfindung liegt die Aufgabe zugrunde einen Schneidapparat der eingangs angegebenen Art weiter zu verbessern. Insbesondere ist der Messerwechsel zu vereinfachen und zu beschleunigen.

Gelöst wird diese Aufgabe bei einer Vorrichtung der eingangs beschriebenen Art erfindungsgemäß dadurch, daß wenigstens eines der Messer an einem Messerhalter angebracht ist und daß der Messerhalter auswechselbar in einen der Messerträger eingesetzt ist. Diese Gestaltung des Schneidapparates macht es möglich, ein verschlissenes Messer samt seinem Messerhalter von seinem Messerträger abzunehmen und einfach einen außerhalb der Maschine vorbereiteten anderen Messerträger dafür einzusetzen. Auf diese Weise ist für den Messerwechsel nur noch eine kurze Maschinenstillstandszeit erforderlich, was die Produktivität der Maschine erhöht.

Fortführungen, Weiterbildungen und vorteilhafte Ausgestaltungen der Erfindung sind in den Unteransprüchen enthalten. Dabei betreffen die Ansprüche 2 und 3 die Ausbildung von Messerhalteraufnahmen in den Messerträgern, die ein schnelles und problemloses Auswechseln und Positionieren der Messerhalter ermöglichen. Mit den Merkmalen des Anspruchs 4 wird das einfache seitliche Herausziehen und Einführen eines Messerhalters in eine Messerhalteraufnahme ermöglicht. Die Ansprüche 5 bis 8 betreffen Merkmale der Spannmittel, mit denen die Messerhalter zuverlässig in den Messerhalteraufnahmen fixiert werden und ein schnelles und problemloses Auswechseln der Messerhalter erlauben. Anspruch 9 gibt die Merkmale einer Einrichtung zum Auswechseln der Messer in den Messerhaltern außerhalb der Maschine an. Mit dieser Einrichtung werden die Verhältnisse der Maschine simuliert, so daß die Messer so in den Messerhaltern positioniert und ausgerichtet werden können, als wären sie unmittelbar in der Maschine. Dadurch ist es möglich, den vorbereiteten Messerhalter dann ohne weitere Montagearbeiten in den Messerträger einzusetzen. Die Ansprüche 10 und 11 beziehen sich auf Merkmale der Messer selbst.

Die Erfindung schafft die Voraussetzungen für einen schnellen und problemlosen Messerwechsel in Schneidapparaten mit rotierenden und stationären Messern. Insbesondere für den Austausch des stationären Messers wirkt es sich vorteilhaft aus, daß das Messer in einem mobilen Messerhalter - einer Messerkassette - außerhalb der Maschine montiert und positionsgenau ausgerichtet werden kann. Auf diese Weise kann immer ein auf den Einsatz vorbereiteter Messerhalter bereitgehalten werden, während ein zweiter gleichzeitig in der Maschine installiert ist. Der Messeraustausch erfordert nur noch kurze Maschinenstillstandszeiten. So ergibt sich eine hohe Produktivität des Schneidapparats, die den technischen Mehraufwand für den oder die zusätzlichen Messerhalter und die externe Positionierung und Ausrichtung der Messer aufwiegt. Ein zusätzlicher Vorteil besteht darin, daß weniger verschleißfeste und daher preisgünstigere Messer, beispielsweise aus Bandstahl, eingesetzt werden können und daß diese Messer auch als stationäre Messer benutzt werden können.

Dank der erfindungsgemäß vorgeschlagenen Maschinenkonzeption fallen die dadurch möglicherweise erforderlichen häufigeren Messerwechsel nicht ins Gewicht, während die Produktivitäts- und Kostenvorteile weit überwiegen.

Die Erfindung wird nun anhand der Zeichnung näher erläutert. Es zeigen
- Fig. 1: einen vertikalen Schnitt durch einen Schneidapparat nach der Erfindung in einer schematischen Darstellung,
- Fig. 2: eine schematische Vorderansicht des Schneidapparats und
- Fig. 3: einen Schnitt durch eine Messerwechsel- und Ausrichteinrichtung nach der Erfindung.

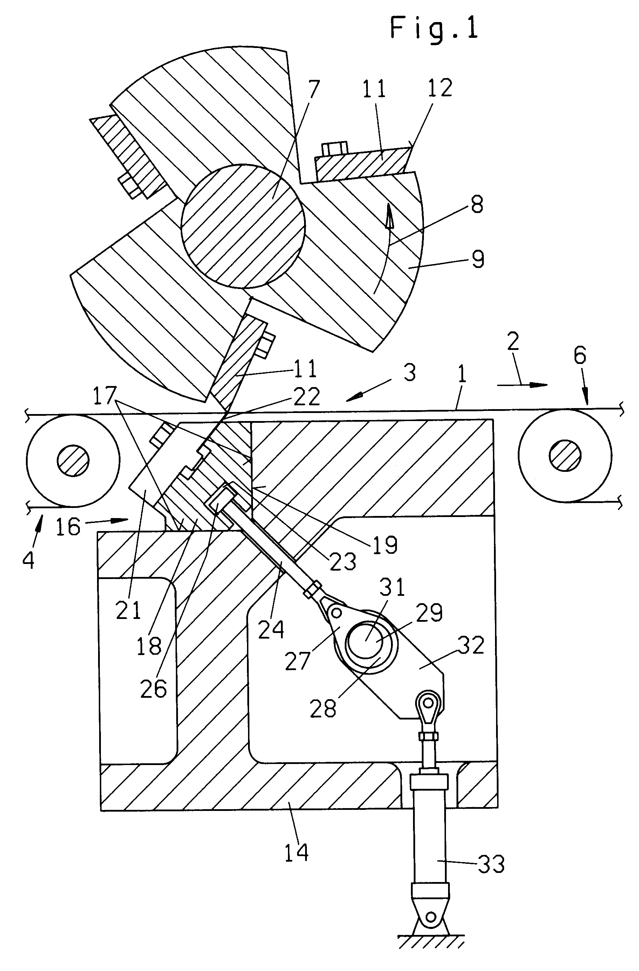

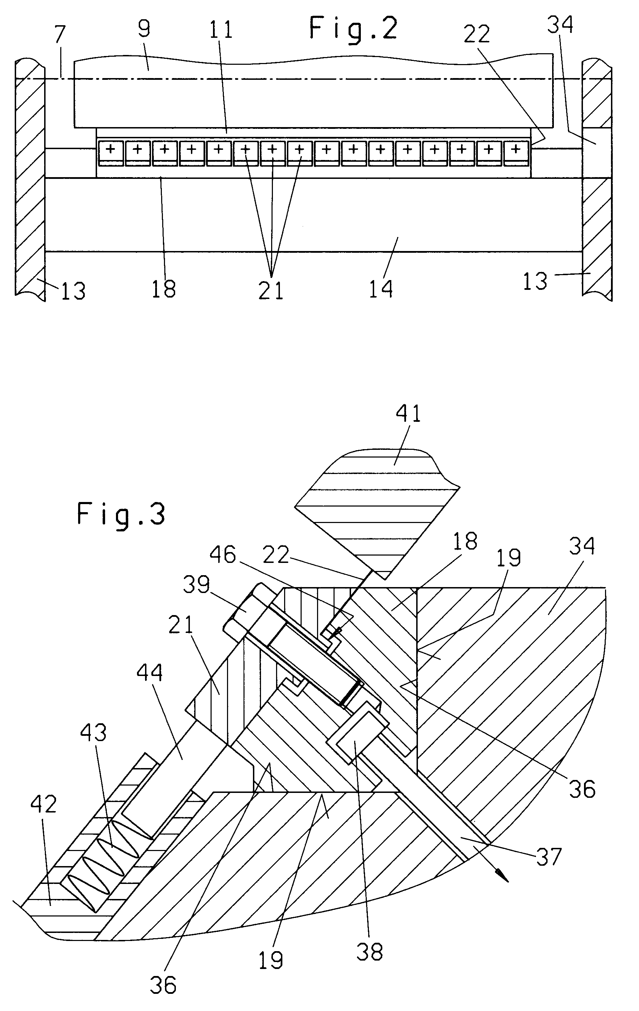

Die Figuren 1 und 2 zeigen einen Schneidapparat nach der Erfindung in einem vertikalen Schnitt bzw. einer schematische Vorderansicht. Gleiche Teile sind in den beiden Figuren mit denselben Bezugszeichen versehen. Die dargestellte Vorrichtung dient zum Querperforieren einer Materialbahn 1 die in Pfeilrichtung 2 durch eine Trenn- oder Perforationszone 3 bewegt wird. Zum Fördern der Materialbahn 1 ist eine Fördereinrichtung vorgesehen, von der in Figur 1 lediglich Bänderpartien 4 und 6 angedeutet sind. Derartige Fördereinrichtungen sind bekannt und bedürfen hier keiner näheren Darstellung und Beschreibung.

Der Schneidapparat weist einen um eine Achse 7 in Pfeilrichtung 8 rotierenden zylindrischen Messerträger 9 auf, der in achsparallelen Aufnahmen gleichmäßig an seinem Umfang verteilt mehrere Messer 11 trägt. Die Messerschneiden 12 der Messer 11 können achsparallel oder in Umfangsrichtung verwunden ausgerichtet sein, um die Schnittbedingungen zu verbessern. Der zylindrische Messerträger 9 ist beidseits stirnseitig im Maschinengestell 13 gelagert. Derartige zylindrische Messerträger sind bekannt und bedürfen daher keiner näheren Beschreibung.

Dem rotierenden Messerträger 9 gegenüber ist unterhalb der bewegten Materialbahn 1 ein stationärer Messerträger 14 angeordnet, der, wie Figur 2 zeigt, beidseits im Maschinengestell 13 verankert ist. Der stationäre Messerträger 14 weist eine quer zur Materialbahn 1 verlaufende Messerhalteraufnahme 16 mit Referenzflächen 17 auf, an denen ein Messerhalter 18 mit den Referenzflächen 17 entsprechenden Anschlagflächen 19 anliegt. Mit Klemmelementen 21 ist am Messerhalter 18 ein stationäres Messer 22 befestigt, das sich soweit quer zur Materialbahn 1 erstreckt, wie Perforationen in die Bahn eingebracht werden sollen. Das stationäre Messer 22 wirkt in der Trenn- bzw. Perforationszone 3 nacheinander mit den rotierenden Messern 11 zum Schnitt zusammen.

Der Messerhalter 18 weist als Haltevorrichtung eine längsverlaufende T-Nut 23 auf, in welcher Zugstangen 24 mit Spannköpfen 26 eingreifen. Jede Zugstange ist an ihrem dem Spannkopf 26 entgegengesetzten Ende mit einem Pleuel 27 versehen, welcher mit einem Exzenterbolzen 28 einer Exzenterwelle 29 zusammenwirkt, um die Zugstange 24 mit dem Spannkopf 26 aus einer Spannposition in eine Wechselposition und umgekehrt zu bringen. Sind mehrere Zugstangen 24 mit Spannköpfen 26 vorgesehen, um den Messerhalter 18 auf dem Messerträger 14 zu arretieren, so können sie alle mittels einer einzigen gemeinsamen Exzenterwelle 29 in diesem Sinne betätigt werden. Die Exzenterwelle 29 ist um eine Achse 31 verdrehbar. Zum Verdrehen der Exzenterwelle 29 ist diese mit einem Hebel 32 verdrehfest verbunden, der mittels eines Antriebes, beispielsweise einer Kolben-Zylinder-Einheit 33, um die Drehachse 31 der Exzenterwelle 29 schwenkbar ist.

Zum Wechseln des Messerhalters 18 wird die Exzenterwelle 29 mittels des Hebels 32 und des Antriebs 33 aus ihrer in Figur 1 gezeigten Spannposition soweit um ihre Drehachse 31 verdreht, daß die Spannköpfe 26 der Zugstangen 24 den Messerhalter 18 freigeben. Der Messerhalter 18 wird jetzt seitlich durch eine im Maschinengestell 13 vorgesehene Öffnung 34 aus der Messerhalteraufnahme 16 herausgezogen und durch einen außerhalb der Maschine vorbereiteten Messerhalter ersetzt. Nachdem der Messerhalter 18 ausgetauscht ist, werden die Zugstangen 24 durch Betätigen des Antriebs 33 über den Hebel 32 und die Exzenterwelle 29 wieder gespannt, so daß der Messerhalter in seiner vorgesehenen Position an den Referenzflächen 17 positionsgenau arretiert ist. Der Wechsel des Messers erfolgt gemäß der Erfindung also einfach durch Austauschen des Messerhalters 18 mit einem verschlissenen Messer 22 gegen einen ebensolchen Messerhalter mit einem neuen Messer. Dieser Austausch ist ersichtlich schnell durchzuführen und erfordert keine langen Stillstandszeiten der Maschine.

Damit der Messerhalter 18 einfach ausgetauscht werden kann, muß ein neues Messer vorher in einen ebensolchen Messerhalter so eingespannt und ausgerichtet werden, daß es nach dem Auswechseln der Messerhalter die für den Schnitt optimale Lage in dem Schneidapparat hat. Dazu ist die in Figur 3 in einem vertikalen Schnitt schematisch dargestellte Vorrichtung vorgesehen.

Diese besteht aus einem zweiten stationären Messerträger 34, der ebenso wie der erste Referenzflächen 36 aufweist. Der Messerhalter 18 wird mittels einer Spanneinrichtung, die ebenso aufgebaut ist wie die im Zusammenhang mit der Figur 1 beschriebene, mit seinen Anschlagflächen 19 gegen die Referenzflächen 36 gezogen und dort arretiert. Von den Spannmitteln sind in Figur 3 nur ein Teil einer Zugstange 37 und ihr Spannkopf 38 zu sehen.

Zum Wechseln des Messers 22 wird nach dem Entfernen des verbrauchten Messers ein neues Messer zwischen dem Messerhalter 18 und den Spannelementen 21 durch Anziehen von Schrauben 39 locker befestigt. Dem Messerträger 34 gegenüber ist ein einstellbarer Anschlag 41 angeordnet, mit dem die Schneidposition der rotierenden Messer 11 des Schneidapparats simuliert wird. Dazu wird dieser Anschlag 41 in eine Position gebracht, die der Schneidposition der Messer 11 des Schneidapparats entspricht. Der zweite stationäre Messerträger 34 trägt auf der dem Messer 22 gegenüberliegenden Seite der Klemmelemente 21 einen oder mehrere Schieber 42, die über Federn 43 und Stempel 44 gegen die Klemmelemente 21 drücken. Die Klemmelemente 21 weisen zum Messer 22 hin jeweils einen Anschlag 46 auf, der sich von der Rückseite weisen zum Messer 22 hin jeweils einen Anschlag 46 auf, der sich von der Rückseite her an das Messer 22 anlegt und es gegen den Ausrichtanschlag 41 drückt. Zum Ausrichten werden der oder die Schieber 42 zum Ausrichtanschlag 41 hin verschoben, bis das Messer 22 seine durch die Anschläge 41 und 46 definierte Lage erreicht hat. Dann wird die Schraube 39 festgezogen und das Messer arretiert. Der Messerhalter 18 ist jetzt vorbereitet für den Einsatz in der Maschine, deren Betrieb unterdessen nicht unterbrochen zu werden braucht.

## Patentansprüche

1. Schneidapparat zum Quertrennen einer laufenden Materialbahn mit die Bahn durch eine Trennzone bewegenden Bahnführungsmitteln, einem um eine quer zur Materialbahn und ihrer Förderrichtung verlaufende Drehachse rotierenden Messerträger mit wenigstens einem sich in Achsrichtung erstreckenden umlaufenden Messer und einem stationären Messerträger mit einem im wesentlichen in Richtung des umlaufenden Messers quer zur Bahn verlaufenden und in der Trennzone zum Schnitt mit dem rotierenden Messer zusammenwirkenden stationären Messer, dadurch gekennzeichnet, daß wenigstens eines der Messer (22) an einem Messerhalter (18) angebracht ist und daß der Messerhalter auswechselbar in einen der Messerträger (14) eingesetzt ist.

2. Schneidapparat nach Anspruch 1, dadurch gekennzeichnet, daß wenigstens einer der Messerträger (14) wenigstens eine Messerhalteraufnahme (16) und Spannmittel (24,31,33) zum lösbaran Arretieren des Messerhalters (18) in der Aufnahme aufweist.

3. Schneidapparat nach Anspruch 1 oder 2, dadurch gekennzeichnet, daß jede Messerhalteraufnahme (16) Referenzflächen (17) und die Messerhalter (18) mit den Referenzflächen korrespondierende Anschlagflächen (19) zum Positionieren der Messerhalter (18) in den Aufnahmen aufweisen.

4. Schneidapparat nach einem der Ansprüche 1 bis 3, dadurch gekennzeichnet, daß jede Messerhalteraufnahme (16) quer zur Materialbahn (1) verlaufende Führungen (17) zum seitlichen Verschieben des jeweiligen Messerhalters (18) aufweist und daß seitlich im Maschinengestell (13) im Bereich der Führungen eine Zugriffsöffnung (34) zum Entnehmen und Einsetzen des Messerhalters (18) in die Messerhalteraufnahme (16) vorgesehen ist.

5. Schneidapparat nach einem der Ansprüche 2 bis 4, dadurch gekennzeichnet, daß als Spannmittel (24,31,33) wenigstens eine Zugstange (24) mit einem in eine entsprechende Haltevorrichtung (23) des Messerhalters (18) eingreifenden Spannkopf (26) und ein Betätigungsmittel (31,33) zum Spannen und Lösen der Zugstange vorgesehen sind.

6. Schneidapparat nach Anspruch 5, dadurch gekennzeichnet, daß als Haltevorrichtung (23) eine im Messerhalter (18) im wesentlichen parallel zum Schnitt verlaufende Nut (23) mit wenigstens einer Spannfläche vorgesehen ist, daß die Spannköpfe (26) der Zugstangen (24) beim Einsetzen des Messerhalters (18) in die Messerhalteraufnahme (16) in die Nut eingreifen und daß die Zugstangen die Spannköpfe beim Arretieren gegen die Spannfläche und dadurch den Messerhalter (18) gegen die Referenzflächen (17) in der Messerhalteraufnahme (16) ziehen und dort positionsgenau fixieren.

7. Schneidapparat nach Anspruch 5 oder 6, dadurch gekennzeichnet, daß jede Zugstange (24) an ihrem dem Spannkopf (26) abgewandten Ende an einem Exzenterzapfen (28) einer für alle Zugstangen gemeinsamen Exzenterwelle (29) drehbar gelagert ist und daß die Exzenterwelle mittels eines Drehantriebes (32,33) aus einer Spannposition, in weicher der Exzenterzapfen den Messerhalter (18) mittels des Spannkopfes der Zugstange in der Messerhalteraufnahme (16) arretiert, in eine Wechselposition, in welcher der Exzenterzapfen den Messerhalter über den Spannkopf freigibt, und zurück verdrehbar ist.

8. Schneidapparat nach Anspruch 7, dadurch gekennzeichnet, daß als Drehantrieb eine Kolben-Zylinder-Einheit (33) vorgesehen ist, die auf einen fest mit der Exzenterwelle (29) verbundenen Schwenkhebel (32) wirkt.

9. Schneidapparat nach einem der Ansprüche 1 bis 8, dadurch gekennzeichnet, daß außerhalb der Materialbahnführung (4,6) ein zweiter stationärer Messerträger (34) mit einer Messerhalteraufnahme und Spannmitteln (37,38) zum Arretieren eines Messerhalters (18) in der Aufnahme vorgesehen ist, daß die Anordnung und die Maße der Messerhalteraufnahme des zweiten Messerträgers denen des ersten Messerträgers (14) entsprechend nachgebildet sind, daß dem stationären zweiten Messerträger (34) ein Anschlag (41) zum Simulieren des rotierenden Messers (11) zugeordnet ist und daß der zweite Messerträger Einstellmittel (42, 46) zum Positionieren und Ausrichten eines Messers (22) in einem in der Messerhalteraufnahme des zweiten Messerträgers arretierten Messerhalter aufweist.

10. Schneidapparat nach einem der Ansprüche 1 bis 9, dadurch gekennzeichnet, daß das stationäre Messer (22) aus Bandstahl besteht.

11. Schneidapparat nach einem der Ansprüche 1 bis 10, dadurch gekennzeichnet, daß das stationäre Messer (22) eine unterbrochene Schneide zum Erzeugen von Perforationen in der Materialbahn (1) aufweist.
